# EUROPEAN PATENT APPLICATION

(11) **EP 2 397 668 A2**
(43) Date of publication of application: **21.12.2011**
(21) Application number: 11004849.3
(22) Date of filing: 14.06.2011
(51) Int. Cl.: F02C 1/04, F02C 6/16

(54) **Method and system for periodic cooling, storing, and heating of atmospheric gas**

(30) Priority: 17.06.2010 US 817627
(71) Applicant: Air Products and Chemicals, Inc., Allentown, PA 18195-1501 (US)
(72) Inventor: Perisco, Paul Joseph, 18062 Macungie, PA (US); Pearlstein, Ronald Martin, 18062 Macungie PA (US); Cirucci, John Frederick, 18062 Schnecksville PA (US); Higginbotham, Paul, Guildford GU1 3QG Surrey (GB); Xu, Jianguo, 18940 Wrightstown PA (US); Vero, Robert, 18049 Emmaus PA (US); Herron, Donn Michael, 18051 Fogelsville PA (US)
(74) Representative: Kador & Partner

(57) **Abstract**

Disclosed is a method and a system. The method and system involve compressing an atmospheric gas stream to form a supercritical atmospheric gas stream, forming at least a first stream from the supercritical atmospheric gas stream, directing the first stream to a regenerator for cooling to form a first cooled stream, directing the first cooled stream from the regenerator, expanding the first cooled stream to form a liquefied atmospheric gas stream, storing at least a portion of the liquefied atmospheric gas stream, pressurizing at least a portion of the stored portion of the liquefied atmospheric gas stream, and heating at least a portion of a pressurized liquefied atmospheric gas stream in the regenerator. In the method and system, refrigeration below the critical temperature of the atmospheric gas is directly or indirectly provided to at least one portion of the system from a non-combustible source.

## Description

### FIELD OF THE INVENTION

The present invention is directed to a method and system for periodic cooling, storing, and heating of atmospheric gas. More specifically, the present invention is directed to a method and system involving a regeneration cycle for atmospheric gas.

### BACKGROUND OF THE INVENTION

Known systems can cool pressurized air obtained during off-peak electricity demand hours (off-peak hours) and vaporize the pressurized air under pressure during peak electricity demand hours (peak hours).

Japanese Patent Application, JP4-132837A, which is hereby incorporated by reference in its entirety, describes a gas turbine power generation facility comprising a gas turbine for driving a power generator, a liquefaction facility for liquefying air, a storage container for storing liquefied fluid, and a vaporization facility for vaporizing the liquefied fluid and feeding the product to a gas turbine burner. When the liquefied fluid is pumped from the storage container, it is vaporized and directed to the gas turbine burner. This facility suffers from several drawbacks. For example, liquefaction of air is carried out by using a dedicated liquefier, which can be inefficient. In addition, the vaporization of the liquefied fluid and transferring of the refrigeration can be inefficient based upon including multiple heat transfer steps.

Japanese Patent Application, JP4-127850, which is hereby incorporated by reference in its entirety, describes a liquid air storage electricity generation system that cools, liquefies, and stores air under normal pressure. The liquid air is warmed and high-pressure air is extracted as required. The high-pressure air is used to drive an electricity-generating turbine and generate electricity. This system suffers from several drawbacks. For example, although use of refrigeration in liquefied natural gas vaporization can reduce energy needs for air liquefaction, liquefied natural gas is not always available. In addition, as a combustible gas, liquefied natural gas involves safety concerns for storage and transport, and more importantly, the heat exchange of liquefied natural gas, a combustible material, with an oxidizing gas (for example, air).

Japanese Patent Application, JP4-191419, which is hereby incorporated by reference in its entirety, describes methods used to supply air at a constant specified pressure to a combustion temperature. In a high-loss method, pressure is increased to a pressure substantially higher than a specified pressure, and the pressure is reduced to a constant pressure during use. In a high-risk method, pressure is raised to a specified level using a separate water head created by sea water, river water, lake water, or the like. In the methods of the JP4-191419 patent, air is liquefied and is reduced in volume as compared with the volume existing at the atmospheric pressure. The liquid is vaporized and refrigeration is stored. The stored refrigeration can be used for the precooling of air aspirated by the air liquefied to reduce the consumption of motive power by the compressor and to reduce the rate at which electric power is consumed in the production of liquid air. This method suffers from the drawback that it does not provide an efficient process for liquefying air and vaporizing the stored liquid air.

Hitachi (Hidefumi Araki, Mitsugu Nakabaru, and Kooichi Chino, Heat Transfer-Asian Research, 31 (4), 2002), which is hereby incorporated by reference in its entirety, describes high pressure air being sent to a combustor of a gas turbine during peak hours. Such a cycle involves a precooled regenerator. Precooling may be achieved by vaporization of liquefied natural gas. In some areas, liquefied natural gas may be unavailable. In addition, as a combustible gas, liquefied natural gas involves safety concerns for storage and transport and more importantly, the heat exchange of liquefied natural gas, a combustible material, with an oxidizing gas (for example, air). Additionally, Hitachi discusses extended cooling by including a regeneration medium such as pebbles or concrete. As such, operation of the precooled regenerator, as disclosed in Hitachi, can result in the regenerator warming up over cycles due to heat leak, heat introduced by machinery such as liquid air pumps, and the heat transfer temperature difference needed for heat transfer to take place in the regenerator and other heat exchangers if the pressure of the air being cooled is the same as or similar to that of the air being heated, so such a process is not sustainable. If the pressure of the air to be heated is much lower than that of the air being cooled, the process becomes rather inefficient.

What is needed is a method and system for cooling and storing an atmospheric gas during a first operational period of a process cycle and heating the atmospheric gas during a second operational period, wherein the method and system operation is sustainable, reliable, and safe. Sustainability desirably includes temperatures and pressures of streams in the system, especially those of lower temperature, at the same phase of the periodic operation being kept substantially constant after weeks or months of operation of the system. Reliability desirably includes the use of materials and equipment that are not constrained by the presence of a large quantity of another material. Safety desirably includes use of non-combustible materials in the system.

### SUMMARY OF THE INVENTION

One aspect of the present disclosure includes a regeneration method for periodic cooling, storing, and heating of atmospheric gas. The method includes compressing an atmospheric gas stream to above a predetermined pressure to form at least a supercritical atmospheric gas stream (the predetermined pressure being about the critical pressure for the atmospheric gas stream), forming at least a first stream from the supercritical atmospheric gas stream, directing the first stream to a regenerator for cooling to form at least a first cooled stream, directing the first cooled stream from the regenerator, expanding the first cooled stream to form at least a liquefied atmospheric gas stream, storing at least a portion of the liquefied atmospheric gas stream as a stored liquefied atmospheric gas, pressurizing at least a portion of the stored liquefied atmospheric gas to above a second predetermined pressure to form a pressurized liquefied atmospheric gas stream (the second predetermined pressure being about the critical pressure of the liquefied atmospheric gas), and heating at least a portion of the pressurized liquefied atmospheric gas stream in the regenerator. Refrigeration below the predetermined temperature is directly or indirectly provided from an external non-combustible source to one or more of the atmospheric gas stream, the supercritical atmospheric gas stream, the first stream, the first cooled stream, the liquefied atmospheric gas stream, and the pressurized liquefied atmospheric gas stream, the predetermined temperature being about the critical temperature of the liquefied atmospheric gas stream.

Another aspect of the present disclosure includes a system for periodic cooling, storing, and heating of an atmospheric gas. The system includes a compressor configured to compress an atmospheric gas stream to above a predetermined pressure to form at least a supercritical atmospheric gas stream (the predetermined pressure being about the critical pressure for the atmospheric gas stream), a regenerator configured to receive a first stream formed by the supercritical gas stream and to form a first cooled stream, a pressure reducing device configured to reduce pressure of the first cooled stream and disposed to form at least a liquefied atmospheric gas stream, a container for storing at least a portion of the liquefied atmospheric gas stream as stored liquefied atmospheric gas, a pressure raising device configured to pressurize the stored liquefied atmospheric gas to above a predetermined pressure (the predetermined pressure being about the critical pressure of the atmospheric gas), and a non-combustible external refrigeration source configured to provide refrigeration below a predetermined temperature to at least one portion of the system, the predetermined temperature being about the critical temperature of the liquefied atmospheric gas stream.

An advantage of the present disclosure includes greater control and greater efficiency of heating and cooling operations in systems for cooling and storing atmospheric gas and related systems.

Another advantage of the present disclosure includes permitting a sustainable periodic cycling using a regenerator, wherein energy losses due to heat exchange are greatly reduced.

Another advantage of the present disclosure is safety due to the use of non-combustible materials in the process.

Another advantage of the present disclosure is increased versatility due to removal of the constraint of having to integrate the system with a liquefied natural gas gasification unit.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 shows a schematic diagram of an exemplary embodiment of a regeneration system according to the disclosure.

FIG. 2 shows a schematic diagram of an exemplary embodiment of a regeneration system according to the disclosure.

FIG. 3 shows a schematic diagram of an exemplary embodiment of a regeneration system according to the disclosure.

FIG. 4 shows a schematic diagram of an exemplary embodiment of a regeneration system according to the disclosure.

FIG. 5 shows a schematic diagram of an exemplary embodiment of a regeneration system according to the disclosure.

FIG. 6 shows a schematic diagram of an exemplary embodiment of a regeneration system according to the disclosure.

### DETAILED DESCRIPTION OF THE INVENTION

Provided is a method and system for cooling and storing an atmospheric gas during a first operational period of a process cycle and heating the atmospheric gas during a second operational period. The system and process involve a regenerator for cooling and heating of the atmospheric gas.

Embodiments of the method and system can increase efficiency due to the storage and subsequent use of liquid atmospheric gas, provide heating or cooling to other operations or systems, adjust heating and cooling operations with the system and related systems, and/or make the process sustainable without introducing large inefficiencies.

As used herein, the term "atmospheric gas" refers to a gas that primarily contains nitrogen, argon, oxygen, or combinations thereof. In one embodiment, the atmospheric gas is a mixture of nitrogen, argon, and oxygen. In one embodiment, the oxygen content can be above about 20.95% by volume. In one embodiment, the argon content can be above about 0.93% by volume. As used herein, the term "regenerator" refers to a fixed body with flow features and a heat capacity operated as a periodic heat transfer device providing cooling when operated in a first operational mode and providing heating in a second operational mode. As used herein, the term "non-combustible" refers to a material that will not combust in the presence of air.

In general, a stream flows through the flow features (for example, flow channels) of a regenerator in a first direction during a first operational period (for example, an off-peak demand period when the price of electricity is generally lower) and during the first operational mode. In the first operational mode, the regenerator absorbs heat from at least a portion of the stream directed into the regenerator. The absorption of heat by the regenerator cools the stream to below a predetermined temperature to form a stream that is directed from the regenerator. During a second operational period (for example, an on-peak demand period when the price of electricity is generally higher), the same regenerator can be operated in a second operational mode. In the second operational mode, a pressurized liquefied atmospheric gas stream is directed through the regenerator that provides heat to the pressurized atmospheric gas stream. The first operational period and the second operational period can repeat multiple times as cycles and the cycles can be repeatedly performed. The first operational period can be during periods of lower energy demand and the second operational period can be during periods of higher energy demand.

As a regenerator is subject to cycles of operation during the first operational period and the second operational period, the ability of the regenerator to transfer or receive heat is provided according to a temperature profile. That is, the regenerator has a predetermined ability to transfer heat during the first operational period and the second operational period. After a predetermined number of cycles, the temperature profile of the regenerator of the present disclosure has to remain substantially constant at any fixed phase of the cycle for the process and/or system to work for a long time. With the temperature profile being substantially constant at fixed phases of the cycle, the temperature of the regenerator does not substantially increase over cycles of operational periods, so that such a process can run for months or longer. This sustainability is provided by an external source of refrigeration provided at a temperature below that of the critical temperature of the atmospheric gas to at least one stream in the process. External source of refrigeration in this disclosure is defined by a refrigeration source being external to the streams that are associated with the regenerator. The external source of refrigeration can be a liquid nitrogen or liquid air stream that comes from a source outside of the process associated with the regenerator, the liquid atmospheric gas storage device, other system components described herein, a refrigerator such as a gas expander, a Sterling refrigerator, a pulse tube refrigerator, a magnetic refrigeration, a combination thereof, etc.

A regenerator can be arranged in series with one or more additional regenerators and/or the regenerator can be arranged in parallel with one or more additional regenerators. Arranging the regenerators in series can reduce longitudinal heat transfer (longitudinal heat transfer being the heat transfer in the direction of flow). In including a plurality of regenerators, it is desirable that different regenerators are configured for different values of predetermined parameters (for example, pressure ranges, temperature ranges, and/or flow ranges).

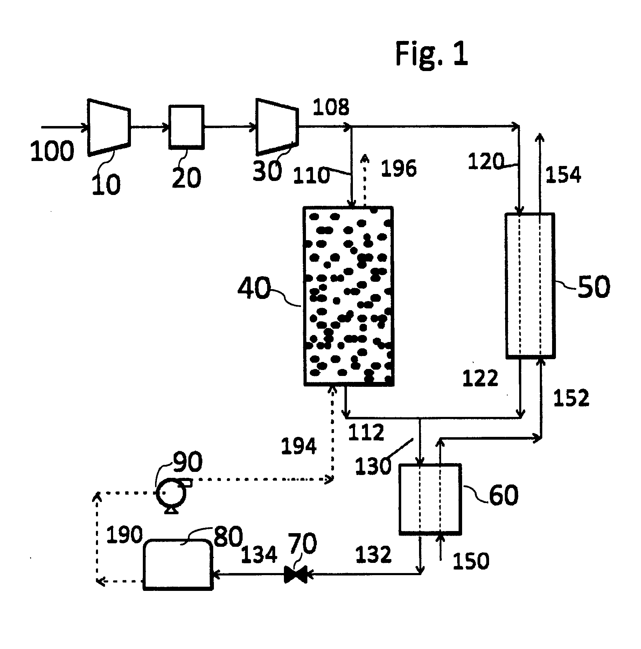

FIG. 1 shows a schematic diagram of a regeneration system 101 for a regeneration method of heating, cooling, and storing an atmospheric gas according to the present disclosure. In one embodiment of the regeneration method, an atmospheric gas stream 100 is pressurized to above a predetermined pressure to form a supercritical atmospheric gas stream 108. The predetermined pressure is about the critical pressure for atmospheric gas within the atmospheric gas stream 100. The atmospheric gas stream 100 is directed through an air compressor 10. Impurities (for example, water vapor, carbon dioxide, and/or other impurities) are removed by an air purifier 20. Further pressurizing is achieved by a booster compressor 30. In one embodiment, the booster compressor 30 can include intercoolers (not shown) and an aftercooler (not shown).

As shown in FIG. 1, in one embodiment, the supercritical atmospheric gas stream 108 is divided into a first stream 110 and a second stream 120. The first stream 110 can be provided at a greater volumetric flow than the second stream 120. The first stream 110 is directed to a regenerator 40. The first stream 110 flows through the flow features (for example, flow channels) of the regenerator 40 in a first direction during a first operational period and during the first operational mode. In the first operational mode, the regenerator 40 receives heat from at least a portion of the first stream 110. This transfer of heat cools the first stream 110 to below a predetermined temperature to form a first cooled stream 112. The predetermined temperature is below the critical temperature for the atmospheric gas in the atmospheric gas stream 100. During a second operational period, the regenerator 40 is operated in a second operational mode. In the second operational mode, a pressurized liquefied atmospheric gas stream is directed through the regenerator 40 that provides heat to produce the regenerator-heated atmospheric gas stream 196.

The second stream 120 (including a portion of the supercritical atmospheric gas stream 108) is directed to an indirect heat exchanger 50 during the first operational period. The indirect heat exchanger 50 cools at least a portion of the second stream 120 to form a second cooled stream 122. The combined cooled stream 130 is further cooled by liquid air or liquid nitrogen stream 150. In one embodiment, cooling is provided by a liquid air or liquid nitrogen stream 150. In other embodiments, one or both of the indirect heat exchangers 50 and 60 may be substituted with any suitable external refrigeration source.

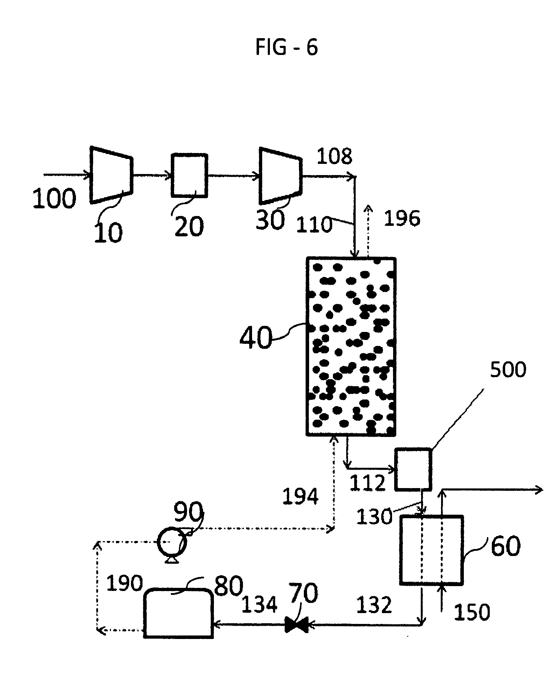

The indirect heat exchangers 50 and 60 can cool the supercritical atmospheric gas stream 108, the first stream 110, the second stream 120, the first cooled stream 112, the combined-cooled stream 130, or a combination thereof, to form an externally cooled stream 132. As used herein, the term "externally cooled" refers to cooling provided from a source other than the regenerator 40. For example, FIG. 1, shows the combined-cooled stream 130 and the second stream 120 being cooled by external cryogenic stream 150 (which can provide refrigeration to both heat changers 50, 60). Additionally or alternatively, cooling can be provided by expanding a high pressure gas stream (not shown) to a temperature below the critical temperature for the atmospheric gas. Referring to FIG. 6, in-line cooling to form the externally cooled stream 132 can be provided by cooling the supercritical atmospheric gas stream 108, the first stream 110, the first cooled stream 112, or a combination thereof. Specifically, FIG. 6 shows the first cooled stream 112 being cooled by the external refrigeration source 500 to form the externally cooled stream 130. In this embodiment, the external refrigeration source 500 can be a Sterling refrigerator, a Gifford-McMahon refrigerator, a pulse tube refrigerator, a thermoacoustic refrigerator, a magnetic refrigerator, a combination thereof, or any other suitable refrigeration source.

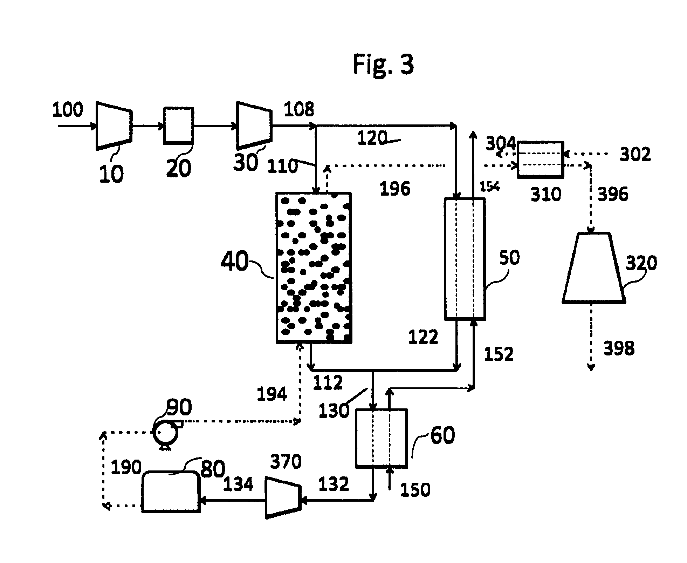

During the first operational period, the first cooled stream 112 and the second cooled stream 122 are arranged to be directed to form the combined-cooled stream 130. The combined-cooled stream 130 is further-cooled by a liquid air or liquid nitrogen stream 150 (which is an external source of refrigeration here) in a second indirect heat exchanger 60. The second indirect heat exchanger 60 is configured for a lower temperature than the first indirect heat exchanger 50. The liquid air or liquid nitrogen stream 150 can be provided at a predetermined pressure (for example, above ambient atmospheric pressure). Upon being cooled, the combined-cooled stream 130 forms a further-cooled stream 132. The further-cooled stream 132 is expanded to form a liquefied atmospheric gas stream 134, which is stored at a lower pressure in air storage tank 80 (for example, slightly above ambient atmospheric pressure). In one embodiment, the cooled stream 132 is expanded by an expansion valve 70. In an alternate embodiment, as shown in FIG. 3, the cooled stream 132 can be expanded by a dense fluid expander 370. In the alternate embodiment, the liquid air or liquid nitrogen stream 150 (a source of external refrigeration in this process) can be heated in the indirect heat exchanger 60 and then heated in the indirect heat exchanger 50.

During the second operational period (illustrated by the dashed/dotted-line portions of FIG. 1), a liquid atmospheric gas stream 190 is directed from the air storage tank 80 and pressurized by a pressure increasing mechanism 90 (for example, a pump) to form a pressurized liquid atmospheric gas stream 194. The pressurized liquid atmospheric gas stream 194 is directed to the regenerator 40 and is heated to about ambient temperature or slightly above ambient temperature. In one embodiment, the pressure of the liquid air is lower (for example, by about 5-50 psi) than the first stream 110 of the atmospheric gas directed into the regenerator 40.

Other suitable sources of cooling may additionally or alternatively be used. For example, external sources may provide additional streams that are below the critical temperature of the atmospheric gas and are blended with the first cooled stream 112, the second cooled stream 122, the liquid air or liquid nitrogen stream 150, the combined cooled stream 130, the further-cooled stream 132, the liquefied atmospheric gas stream 134, the liquid atmospheric gas stream 190, and/or the pressurized liquid atmospheric gas stream 194. In one embodiment, additional or alternative cooling is provided from one or more regenerators. The external refrigeration permits cooling below the critical temperature of the atmospheric gas, thereby extending the operational duration of the regeneration system. For example, including the external refrigeration can extend operational sustainability by a duration of months or years. Introducing liquid nitrogen, liquid air, and/or adding a cryogenic refrigerator into the process can provide such external refrigeration. The cooling in the regeneration system is performed using non-combustible materials. For example, fluids used in cooling of the refrigeration system are non-combustible. As used herein, the term "non-combustible fluid" can include air, argon, nitrogen, oxygen, helium, xenon, and combinations thereof.

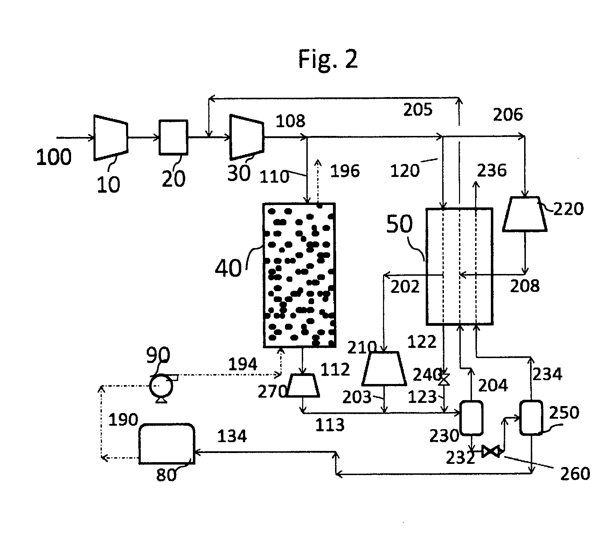

FIG. 2 shows a schematic diagram of regeneration system 101 according to a further embodiment of the disclosure. As in the embodiment shown in FIG. 1, supercritical atmospheric gas stream 108 is divided into a first stream 110 and a second stream 120. In this embodiment, a supercritical atmospheric gas stream 202 (a portion of the second stream 120 that is cooled to a predetermined temperature such as about -50° F to about -180° F is directed from within the indirect heat exchanger 50 to an expander 210. An exhaust stream 203 (which may be a two-phase stream) is directed from the indirect heat exchanger 50 to a phase separator 230. The phase separator 230 directs a vapor stream 204 to the indirect heat exchanger 50. The indirect heat exchanger 50 transfers heat to the vapor stream 204 to form a heated atmospheric gas stream 205. The heated atmospheric gas stream 205 is at an increased temperature (for example, about ambient temperature) and a predetermined pressure (for example, above about 90 psia). The heated atmospheric gas stream 205 can be recycled to the inlet of the booster compressor 30 or for other purposes such as for feeding to a cryogenic air separation unit.

In addition to the first stream 110 and the second stream 120, the supercritical atmospheric gas stream 108 can be divided into the third stream 206, which can be smaller than the first stream 110 and the second stream 120. The third stream 206 is directed to a second expander 220. The second expander 220 can be configured for a higher temperature than expander 210 and can substantially balance heat supply with heat absorption at a plurality of temperatures in the indirect heat exchanger 50. The second expander 220 expands the third stream 206 to form an expander exhaust stream 208. The expander exhaust stream 208 is directed to the indirect heat exchanger 50 to combine with vapor stream 204 after it is partially heated within the indirect heat exchanger 50, thereby forming heated atmospheric gas stream 205 upon further heating in the heat exchanger 50. The heated atmospheric gas stream 205 is at about ambient temperature. The heated atmospheric gas stream 205 is recycled to the inlet of the booster compressor 30.

In the embodiment shown in FIG. 2, the first cooled stream 112 is expanded by a dense fluid expander 270, and the second cooled stream 122 is expanded by a throttle valve 240. Here, the exhaust of the first expander 210 (for example, stream 203) and that of the first expander 210 (for example, stream 208) provide external refrigeration to the system. Among them, the colder portion of the refrigeration provided by the exhaust of the first expander (for example, stream 203) is below the critical temperature of the atmospheric gas streams being cooled (streams 110 and 120). The first cooled stream 112, the second cooled stream 122, and the exhaust stream 203 directed from the indirect heat exchanger 50 are combined and directed to the phase separator 230 to form a liquid stream 232 and a vapor stream 204. The liquid stream 232 is directed from the phase separator 230, further expanded by a throttle valve 260, and directed to a second phase separator 250. The second phase separator 250 operates at a lower pressure than the first phase separator 230. The second phase separator 250 forms a nitrogen-rich vapor stream 234 that is directed to the indirect heat exchanger 50. In the indirect heat exchanger 50, the nitrogen-rich vapor stream 234 receives heat from second stream 120 and forms a second nitrogen-rich vapor stream 236. The second nitrogen-rich vapor stream 236 is vented or directed to further processes. Liquid from the second phase separator 250 forms the liquefied atmospheric gas stream 134 and is directed to the liquid air atmospheric gas storage tank 80.

FIG. 3 shows a schematic diagram of the regeneration system 101 according to another embodiment of the disclosure. In this embodiment, a regenerator-heated atmospheric gas stream 196 (including atmospheric gas) is directed from the regenerator 40 to a heat exchanger 310 to form a heated stream 396. The heat exchanger 310 transfers heat from an exhaust stream 302 of a gas turbine (not shown) to the regenerator-heated atmospheric gas stream 196. The gas turbine can be used for generating electricity during the second operational period (peak operation). The heated stream 396 is directed to an expander 320 to form an expanded stream 398 and to generate power. In one embodiment, operation of the system 101 includes directing streams having approximately the compositions listed in Table 1.

**Table 1**

| | Composition (mol%) | | | | | | | |
|---|---|---|---|---|---|---|---|---|
| | N₂ | Ar | O₂ | CO₂ | H₂O | P(psia) | T(F) | Flow(lbmol/h) |
| Stream | | | | | | | | |
| 100 | .7812 | .0093 | .2095 | 0 | 0 | 14.69 | 90 | 6500 |
| 110 | .7812 | .0093 | .2095 | 0 | 0 | 849 | 100 | 6402.5 |
| 120 | .7812 | .0093 | .2095 | 0 | 0 | 849 | 100 | 97.5 |
| 112 | .7812 | .0093 | .2095 | 0 | 0 | 845 | -311.5 | 6402.5 |
| 132 | .7812 | .0093 | .2095 | 0 | 0 | 844 | -317.5 | 6500 |
| 134 | .7812 | .0093 | .2095 | 0 | 0 | 15 | -317.5 | 6500 |
| 150 | 1 | 0 | 0 | 0 | 0 | 15.5 | -319.6 | 228 |
| 154 | 1 | 0 | 0 | 0 | 0 | 15 | -29.0 | 6500 |
| 194 | .7812 | .0093 | .2095 | 0 | 0 | 845 | -312.29 | 6500 |
| 196 | .7812 | .0093 | .2095 | 0 | 0 | 845 | -312.29 | 6500 |
| 396 | .7812 | .0093 | .2095 | 0 | 0 | 840 | 88.15 | 6500 |
| 398 | .7812 | .0093 | .2095 | 0 | 0 | 14.7 | 97.44 | 6500 |
| 302 | .74756 | .00890 | .11435 | .04306 | .08612 | 15 | 900 | 6689.3 |
| 304 | .74756 | .00890 | .11435 | .04306 | .08612 | 14.7 | 165.7 | 6689.3 |

In this embodiment, work by the air compressor 10 and booster compressor 30 can be about 11,903 kW, work by the expander 320 can be about - 10006 kW, and work by the dense fluid expander 370 can be about -88 kW. In this embodiment, the flow conditions, work inputs, and/or work outputs are based on the same flow duration the first operational period (off-peak operation) and the second operational period (peak operation). In other embodiments, the duration of the first operational period and the duration of the second operational period differ. For example, the first operational period (off-peak operation) can be 10 hours while the second operational period (peak operation) can be 6 hours. In this embodiment, the flow amounts of the streams 100, 110, 120, 112, and 132 during the first operational period, or a flow amount of streams 150, 154, 194, 196, 396, 398, 302, and 304 and an amount of work of the expander 320 and/or the dense fluid expander 370 during the second operational period can be adjusted. For example, the adjustment can include reducing the flow amounts of the streams 100, 110, 120, 112, and 132 by multiplying by a factor of 0.6 and reducing the amount of work of the air compressor 10 by multiplying by the same factor. In this embodiment, the flow amount of liquid nitrogen in stream 150 can be about 3.5% of the flow amount of the regenerator-heated atmospheric gas stream 196.

In one embodiment, the expanded stream 398 directed from the expander 320 is directed to an air separation system (not shown). In another embodiment, the expanded stream 398 is directed to a data center 610 as a source of cooling. For example, computers in a data center may be maintained by air of a predetermined temperature and/or a predetermined relatively low humidity. In one embodiment, in conjunction with the operating conditions described with reference to FIG. 3, expanded stream 398 is within a predetermined temperature range. The expanded stream 398 can be blended with air to form a stream with a desired temperature and/or a desired humidity. This use of the expanded stream 398 in the data center 610 can reduce or eliminate the need for refrigeration during the peak electricity demand hours.

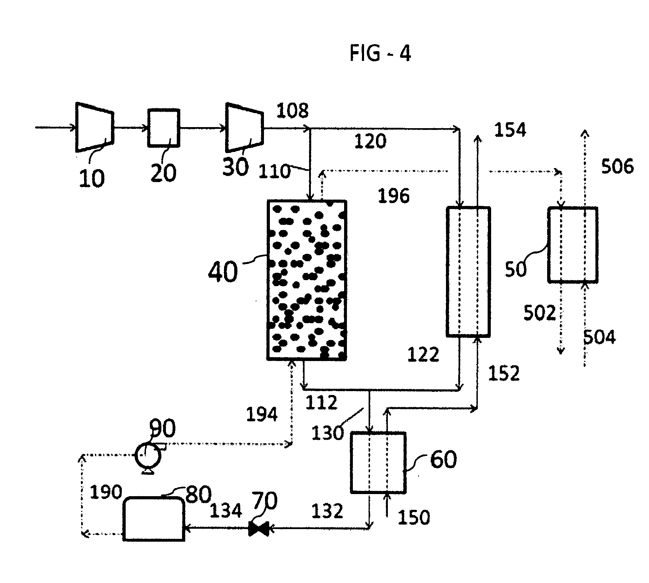

FIG. 4 shows a schematic diagram of the regeneration system 101 according to one embodiment of the disclosure. In this embodiment, the regenerator-heated atmospheric gas stream 196 is directed from the regenerator 40 to a heat exchanger 50 of a cryogenic air separation plant (not shown). The heat exchanger 50 is a "pumped LOX heat exchanger" which can be used to heat a pumped liquid oxygen from a cryogenic air separation plant. The heat exchanger 50 transfers heat from the regenerator-heated atmospheric gas stream 196 to a liquid oxygen stream 504 directed to the heat exchanger 50. Upon being heated, the liquid oxygen stream 504 forms a gaseous or supercritical oxygen stream 506, which is sent to an oxygen consuming process. Upon being the cooled, regenerator-heated atmospheric gas stream 196 forms a cooled stream 502 and is used in a cryogenic air separation plant.

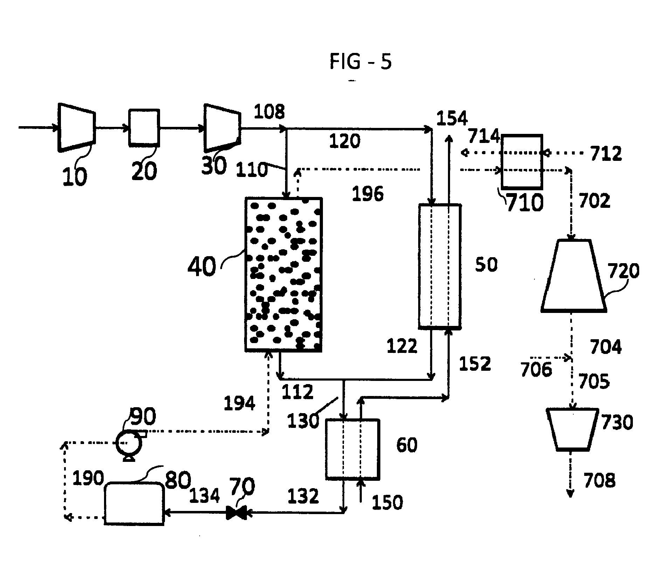

FIG. 5 shows a schematic diagram of the regeneration system 101 according to another embodiment of the disclosure. In this embodiment, the regenerator-heated atmospheric gas stream 196 directed from the regenerator 40 is heated by an exhaust gas stream 712 of a gas turbine in a heat exchanger 710. The exhaust gas stream 712 forms a cooled stream 714, which can be vented or used in another process. The regenerator-heated atmospheric gas stream 196 forms a heated stream 702 that is directed to the expander 720 forming an expanded stream 704 which forms at least a part of a feed stream 705. The feed stream 705 can be directed to a gas turbine compressor 730 after injection of a water stream 706 to further cool atmospheric gas in the gas turbine compressor 730 (for example, by evaporative cooling), thereby forming a compressed air-like stream 708 that is sent to the combustor (not shown) of the gas turbine (not shown). In one embodiment, the feed stream 705 is directed to an air separation system (not shown).

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A regeneration method for periodic cooling, storing, and heating of atmospheric gas, the method comprising:
compressing an atmospheric gas stream to above a predetermined pressure to form at least a supercritical atmospheric gas stream, the predetermined pressure being about the critical pressure for the atmospheric gas stream;
forming at least a first stream from the supercritical atmospheric gas stream;
directing the first stream to a regenerator for cooling to form at least a first cooled stream;
directing the first cooled stream from the regenerator;
expanding the first cooled stream to form at least a liquefied atmospheric gas stream;
storing at least a portion of the liquefied atmospheric gas stream as a stored liquefied atmospheric gas;
pressurizing at least a portion of the stored liquefied atmospheric gas to above a second predetermined pressure to form a pressurized liquefied atmospheric gas stream, the second predetermined pressure being about the critical pressure of the liquefied atmospheric gas; and
heating at least a portion of the pressurized liquefied atmospheric gas stream in the regenerator;
wherein refrigeration below the predetermined temperature is directly or indirectly provided from an external non-combustible source to one or more of the atmospheric gas stream, the supercritical atmospheric gas stream, the first stream, the first cooled stream, the liquefied atmospheric gas stream, and the pressurized liquefied atmospheric gas stream, the predetermined temperature being about the critical temperature of the liquefied atmospheric gas stream.

2. The method of claim 1, further comprising:
dividing the supercritical atmospheric gas stream into at least the first stream and a second stream;
directing the second stream to an indirect heat exchanger and cooling at least a portion of the second stream to form at least a second cooled stream;
combining the first cooled stream and the second cooled stream.

3. The method of claim 2, wherein the dividing occurs during a first operational period, the first operational period being during off-peak operation.

4. The method of claim 3, wherein the heating of the portion of the pressurized liquefied atmospheric gas stream in the regenerator occurs during a second operational period, the second operational period being during peak operation.

5. The method of claim 4, wherein the dividing occurs during the first operational period and the second operational period.

6. The method of claims 4 or 5, wherein the second operational period has a briefer duration than the first operational period.

7. The method of any of claims 2 to 6, further comprising directing at least a portion of the second supercritical atmospheric gas stream from the indirect heat exchanger to an expander.

8. The method of any of claims 2 to 7, further comprising:
directing an exhaust stream from the indirect heat exchanger to a phase separator;
directing a vapor stream from the phase separator to the indirect heat exchanger;
heating the vapor stream to form a heated atmospheric gas stream; and
recycling the heated atmospheric gas stream to a booster compressor, the booster compressor being arranged and disposed for compressing the atmospheric gas stream.

9. The method of any of the preceding claims, wherein at least a portion of the refrigeration is provided by a liquid air or liquid nitrogen stream.

10. The method of any of the preceding claims, further comprising dividing the supercritical atmospheric gas into a third stream and directing the third stream to an expander.

11. The method of any of the preceding claims, wherein the first cooled stream is expanded by a dense fluid expander.

12. The method of any of the preceding claims, further comprising directing the heated portion of the pressurized liquefied atmospheric gas stream to a heat exchanger, the heat exchanger being configured to transfer heat from an exhaust stream of a gas turbine.

13. The method of any of the preceding claims, further comprising directing a regenerator-heated atmospheric gas stream to an expander to form an expanded stream, and directing the expanded stream to an air separation system, the regenerator-heated atmospheric gas stream being a pressurized atmospheric gas stream heated by the regenerator.

14. The method of any of the preceding claims, further comprising directing a regenerator-heated atmospheric gas stream to an expander to form at least an expanded stream, and directing the expanded stream to a data center for cooling, the regenerator-heated atmospheric gas stream being a pressurized atmospheric gas stream heated by the regenerator.

15. The method of any of the preceding claims, further comprising directing a regenerator-heated atmospheric gas stream to a heat exchanger of a cryogenic air separation plant, the regenerator-heated atmospheric gas stream being a pressurized atmospheric gas stream heated by the regenerator.

16. The method of any of the preceding claims, further comprising heating a regenerator-heated atmospheric gas stream by an exhaust stream of a gas turbine, the regenerator-heated atmospheric gas stream being a pressurized atmospheric gas stream heated by the regenerator.

17. The method of any of the preceding claims, wherein at least a portion of the pressurized liquefied atmospheric gas stream heated in the regenerator is formed from the stored portion of the liquefied atmospheric gas stream, or is formed from a source other than the stored portion of the liquefied atmospheric gas stream.

18. A system operably configured to perform the method of any of the preceding claims.

19. A system for periodic cooling, storing, and heating of atmospheric gas, the system comprising:
a compressor configured to compress an atmospheric gas stream to above a predetermined pressure to form at least a supercritical atmospheric gas stream, the predetermined pressure being about the critical pressure for the atmospheric gas stream;
a regenerator configured to receive a first stream formed by the supercritical gas stream and form a first cooled stream;
a pressure reducing device configured to reduce pressure of the first cooled stream and disposed to form at least a liquefied atmospheric gas stream;
a container for storing at least a portion of the liquefied atmospheric gas stream as stored liquefied atmospheric gas;
a pressure raising device configured to pressurize the stored liquefied atmospheric gas to above a predetermined pressure, the predetermined pressure being about the critical pressure of the atmospheric gas; and
a non-combustible external refrigeration source configured to provide refrigeration below a predetermined temperature to at least one portion of the system, the predetermined temperature being about the critical temperature of the liquefied atmospheric gas stream.
